# EUROPÄISCHE PATENTSCHRIFT

(11) **EP 1 846 299 B1**
(45) Veröffentlichungstag und Bekanntmachung des Hinweises auf die Patenterteilung: **21.05.2008**
(21) Anmeldenummer: 05821886.8
(22) Anmeldetag: 30.11.2005
(51) Int. Cl.: B65B 61/18, B31B 1/84, B65B 51/22, B29C 65/08, B29C 65/78

(54) **VORRICHTUNG UND VERFAHREN ZUM APPLIZIEREN VON AUSGIESSELEMENTEN AUF KARTON/KUNSTSTOFF-VERBUNDPACKUNGEN UND/ODER ZUM VERSCHLIESSEN SOLCHER PACKUNGEN MITTELS ULTRASCHALL-SCHWEISSWERKZEUGEN**
DEVICE AND METHOD FOR APPLYING POURING ELEMENTS TO CARDBOARD/PLASTIC COMPOSITE PACKAGINGS AND/OR CLOSING SAID PACKAGINGS BY ULTRASOUND WELDING TOOLS
DISPOSITIF ET PROCEDE POUR APPLIQUER DES ELEMENTS VERSEURS SUR DES EMBALLAGES COMPOSITES CARTON/PLASTIQUE ET/OU FERMER CES DERNIERS AU MOYEN D'OUTILS DE SOUDAGE PAR ULTRASONS

(30) Priorität: 04.12.2004 DE 102004058514
(43) Veröffentlichungstag der Anmeldung: 24.10.2007
(73) Patentinhaber: SIG Technology AG, 8212 Neuhausen am Rheinfall (CH)
(72) Erfinder: BALTES, Klaus, 50127 Bergheim (DE)
(74) Vertreter: Cohausz & Florack
(86) Internationale Anmeldenummer: PCT/EP2005/012756
(87) Internationale Veröffentlichungsnummer: WO 2006/058715

(56) Entgegenhaltungen:
- EP-A- 1 215 124
- DE-A1- 2 550 464
- DE-B- 1 123 248
- FR-A- 1 572 945
- US-A- 3 494 817
- US-A- 3 996 724

## Beschreibung

Die Erfindung betrifft eine Vorrichtung und ein Verfahren zum Applizieren von Ausgießelementen auf und/oder Verschließen von Karton/Kunststoff-Verbundpackungen mittels Ultraschall-Schweißwerkzeugen, wobei die Packungen mittels einer Transportvorrichtung in endlos hintereinander angeordneten Aufnahmestationen transportiert werden.

Vorrichtungen für den zuvor genannten Zweck sind in vielerlei Ausgestaltungen seit langem bekannt. Da bei der Verwendung von Ultraschall neben der Schwingung auch große Presskräfte bereitgestellt werden müssen, sind die eingesetzten Schweißwerkzeuge relativ massiv, so dass auch die Bauteile der in Rede stehenden Vorrichtungen entsprechend groß bauen. Diese Baugröße bestimmt letztendlich die Baugröße der bekannten Anlagen. Wenn im folgenden stets von "Schweißwerkzeugen" die Rede ist, so sollen hiervon sämtliche Bearbeitungswerkzeuge umfasst werden, das heißt insbesondere auch solche, welche beispielsweise zum Applizieren von Ausgießelementen verwendet werden oder solche, die die Packungen auf andere Weise verschließen als durch einen Schweißvorgang.

Bei linear hintereinander transportierten Packungen lässt sich durch die parallele Anordnung durch die Beabstandung der einzelnen Linien zueinander (Bahnabstand) der Abstand der Aufnahmestationen zueinander auf ein geeignetes Maß reduzieren. Jedoch gilt dies nicht für Rundläufer, da dort die Schweißwerkzeuge radial auf einem Transportrad angeordnet werden müssen. Um alle Aufnahmestationen des Transportrades mit einem Schweißwerkzeug auszustatten, muss der Abstand zwischen den Stationen und damit die Baugröße und Masse des gesamten Rundläufers relativ groß sein.

Solche Rundläufer sind beispielsweise aus der EP 1 215 124 A1 bekannt, die eine Vorrichtung zum Applizieren von Ausgießelementen auf Karton/Kunststoff-Verbundpackungen betrifft oder der DE 11 23 248 B bekannt, welche eine Vorrichtung zum Verschließen derartiger Packungen beschreibt. In beiden Fällen werden die Packungen mit einem endlos umlaufenden Packungstransportrad gefördert. Aus der EP 1 215 124 A1 ist es bereits für sich bekannt, die Werkzeuge relativ zu den Aufnahmestationen verfahrbar anzuordnen. Im Fall der DE 11 23 248 B ist die Anzahl der Aufnahmestationen auf dem Packungstransportrad größer als die Anzahl der verwendeten Werkzeuge. Auch ist für sich bereits bekannt, Ultraschallwerkzeuge zum Verschließen der Packungen einzusetzen. So zeigt die US 3,494,817, dass die auf einem zum Packungstransportrad konzentrischen Werkzeugrad angeordneten Schweißwerkzeuge als Ultraschallwerkzeuge ausgebildet sind. Alle vorgenannten bekannten Vorrichtungen sind konstruktiv aufwendig gestaltet.

Der vorliegenden Erfindung liegt daher die Aufgabe zugrunde, die eingangs genannte und zuvor näher beschriebene Vorrichtung bzw. das entsprechende Verfahren so auszugestalten und weiterzubilden, dass die vorerwähnten Nachteile vermieden werden und insbesondere der Abstand der Aufnahmestationen minimiert werden kann.

Bezüglich der verwendeten Vorrichtung wird diese Aufgabe durch die Gesamtheit aller Merkmale von Anspruch 1 gelöst.

Hinsichtlich des Verfahrens erfolgt die Lösung der Aufgabe durch die Gesamtheit der Merkmale von Anspruch 11.

Die Erfindung hat erkannt, dass durch die Trennung der Anordnung und Bewegung von Schweißwerkzeugen und Aufnahmestationen auf einem Rundläufer die Aufnahmestationen sehr eng benachbart angeordnet sein können, wenn die Bearbeitung zweier benachbarter Packungen nicht gleichzeitig, sondern zeitlich versetzt erfolgt.

Gemäß einer weiteren Lehre der Erfindung sind die Schweißwerkzeuge auf einem konzentrisch zum Packungstransportrad verdrehbaren Werkzeugrad angeordnet. Auf diese Weise ist es möglich, dass der radiale Abstand der Schweißwerkzeuge zu den Aufnahmestationen stets gleich bleibt, die Schweißwerkzeuge jedoch relativ zu den Aufnahmestationen in Umfangsrichtung verfahrbar sind.

Eine weitere Ausgestaltung der Erfindung sieht vor, dass zwischen dem Packungstransportrad und dem Werkzeugrad ein Getriebe vorgesehen ist. Dieses Getriebe ist bevorzugt als Schrittgetriebe ausgebildet und sorgt so durch eine entsprechende Übersetzung für einen rotatorischen Versatz und eine zum Bearbeiten benötigte Synchronzeit des sich kontinuierlich drehenden Packungstransportrades und den entsprechend schrittweise verfahrbaren Schweißwerkzeugen. Eine weitere Lehre der Erfindung sieht vor, dass das Getriebe ortsfest auf dem Packungstransportrad angeordnet ist.

Hierbei wird gemäß einer weiteren Lehre der Erfindung das Getriebe mit dem Packungstransportrad gemeinsam angetrieben, wobei vorzugsweise ein auf der Antriebswelle des Getriebes angeordnetes Zahnrad mit einem stillstehenden (sich nicht mit dem Packungstransportrad mitdrehenden) Sonnenrad kämmt. Diese Anordnung ist besonders zweckmäßig, da die für die Versatzbewegung bzw. synchrone Drehbewegung des Werkzeugrades benötigte Energie unmittelbar vom kontinuierlich angetriebenen Packungstransportrad erhalten wird, so dass die Synchronisation von Werkzeugrad und Transportrad sichergestellt ist. Steht die Abtriebswelle still, wird das Werkzeugrad synchron mitgedreht; wird die Drehung der Antriebswelle des Getriebes auf dessen Abtriebswelle übertragen, verlangsamt sich das Werkzeugrad.

Gemäß einer alternativen Lehre der Erfindung ist es auch möglich, dass ein separater Antrieb zum Drehen des Getriebes vorgesehen ist. Es ist klar, dass diese alternative Ausgestaltung einen erheblichen Mehraufwand bezüglich der Ansteuerung des Getriebes verursacht, um die notwendige Synchronisation von Werkzeugrad und Packungstransportrad zu erreichen.

Gemäß einer bevorzugten weiteren Ausgestaltung der Erfindung beträgt die Anzahl der Aufnahmestationen ein ganzzahliges Mehrfaches der Schweißwerkzeuge. In diesem Fall ist es besonders zweckmäßig, wenn das Übersetzungsverhältnis des Getriebes so gewählt ist, dass das Werkzeugrad in Bezug auf das Packungstransportrad entsprechend der Anzahl der zu bearbeitenden Packungen sowie der Bearbeitungsdauer verfahrbar ist.

In einer besonders bevorzugten Ausführung der Erfindung ist das Packungstransportrad mit 28 Aufnahmestationen und das Werkzeugrad mit sieben Schweißwerkzeugen versehen. Versuche haben ergeben, dass in einem praxisgerechten Rundläufer sechs Schweißwerkzeuge im Dauereingriff benötigt werden. Weil der Ein- bzw. Auslauf eines Rundläufers nicht für die Bearbeitung nutzbar ist, werden sieben Schweißwerkzeuge eingesetzt. Da sich diese jedoch nicht in der gewünschten Teilung unterbringen lassen, ist das Packungstransportrad mit 28 Aufnahmestationen ausgestattet, um einerseits den Bauraum für die Schweißwerkzeuge und andererseits die Umlaufzeit für das Packungstransportrad zu vergrößern. Diese Zeit wird genutzt, um die Packungen nacheinander zu verschweißen. Hierfür spielt es keine Rolle, ob die Schweißwerkzeuge zum Aufbringen von Ausgießelementen oder zum Verschließen der bereits gefüllten Packungen eingesetzt werden. Im Betrieb synchronisiert sich das Werkzeugrad mit dem Packungstransportrad, um die jeweils sechs im Eingriff befindlichen Packungen zu bearbeiten. Anschließend wird das Werkzeugrad in Bezug auf das Packungstransportrad verlangsamt und synchronisiert nach Erreichen der benachbarten Aufnahmestation seine Drehgeschwindigkeit wieder mit der des Packungstransportrades.

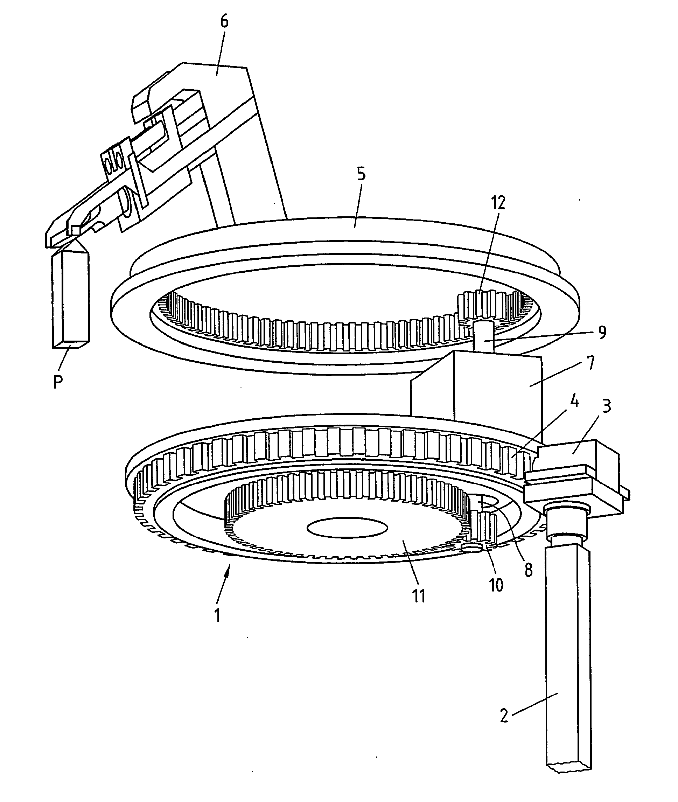

Die Erfindung wird nachfolgend anhand einer lediglich ein Ausführungsbeispiel darstellenden Zeichnung näher erläutert. In der einzigen Figur ist - stark vereinfacht - das Prinzip einer erfindungsgemäßen Vorrichtung dargestellt. Man erkennt zunächst ein Packungstransportrad 1, über dessen Umfang eine Vielzahl von nicht dargestellten Aufnahmestationen angeordnet sind, in denen Packungen P hintereinander transportiert werden, von denen nur eine einzige dargestellt ist, um die Übersichtlichkeit der Prinzipdarstellung zu gewährleisten. Angetrieben wird das Packungstransportrad 1 über einen Antrieb 2 und ein Getriebe 3, welches ortsfest angeordnet sind.

Oberhalb des Packungstransportrades 1 ist ein drehbar angeordnetes Werkzeugrad 5 dargestellt, auf dessen Umfang eine Mehrzahl radial angeordneter Schweißwerkzeuge 6 vorgesehen sind, von denen zur besseren Übersicht wiederum nur ein einziges dargestellt ist. Das dargestellte Schweißwerkzeug 6 dient zum Verschließen der Packung P, könnte jedoch auch ein Werkzeug zum Aufbringen eines Ausgießelementes auf eine Packung sein.

Um nun erfindungsgemäß das Werkzeugrad 5 relativ zum - kontinuierlich angetriebenen - Packungstransportrad 1 verfahren zu können, ist ein Getriebe 7 vorgesehen, welches mit dem Packungstransportrad 1 fest verbunden ist. Das Getriebe 7 weist eine Antriebswelle 8 und eine Abtriebswelle 9 auf. Die Antriebswelle 8 ist mit einem Zahnrad 10 versehen, welches mit einem unterhalb des Packungstransportrades 1 angeordneten und fest mit dem (nicht dargestellten) Gestell verbundenen und daher stillstehenden Sonnenrad 11 kämmt. Zweckmäßigerweise ist das Getriebe 7 als Schrittgetriebe ausgebildet, so dass über die Abtriebswelle 9 und ein darauf angeordnetes Zahnrad 12 das Werkzeugrad 5 abwechselnd synchron mit dem Packungstransportrad 1 bewegt und wieder verlangsamt wird. Dreht sich die Abtriebswelle 9 des Schrittgetriebes 7 nicht, bewegen sich Packungstransportrad 1 und Werkzeugrad 5.mit gleichmäßiger Geschwindigkeit.

Die Übersetzung des Getriebes 7 ist dabei so gewählt, dass die Stillstandszeit der Abtriebswelle 9 der Bearbeitungsdauer entspricht, die Schweißwerkzeuge 6 dann verlangsamt werden, bis die nächstfolgende Aufnahmestation vorgefahren ist und während der weiteren synchronen Bewegung beider Räder 1 und 5 der nächste Bearbeitungszyklus beginnen kann.

## Patentansprüche

1. Vorrichtung zum Applizieren von Ausgießelementen auf und/oder Verschließen von Karton/Kunststoff-Verbundpackungen (P) mittels Ultraschall-Schweißwerkzeugen (6), wobei die Packungen (P) mittels einer Transportvorrichtung in endlos hintereinander angeordneten Aufnahmestationen transportiert werden, wobei als Transportvorrichtung ein Packungstransportrad (1) vorgesehen ist, wobei die Anzahl der Aufnahmestationen auf dem Packungstransportrad (1) größer ist als die Anzahl der verwendeten Schweißwerkzeuge (6) und wobei die Schweißwerkzeuge (6) relativ zu den Aufnahmestationen verfahrbar sind.

2. Vorrichtung nach Anspruch 1,
**dadurch gekennzeichnet, dass** die Schweißwerkzeuge (6) auf einem konzentrisch zum Packungstransportrad (1) verdrehbaren Werkzeugrad (5) angeordnet sind.

3. Vorrichtung nach Anspruch 2,
**dadurch gekennzeichnet, dass** zwischen dem Packungstransportrad (1) und dem Werkzeug (5) ein Getriebe (7) vorgesehen ist.

4. Vorrichtung nach Anspruch 3,
**dadurch gekennzeichnet, dass** das Getriebe (7) ein Schrittgetriebe ist.

5. Vorrichtung nach Anspruch 3 oder 4,
**dadurch gekennzeichnet, dass** das Getriebe (7) ortsfest auf dem Packungstransportrad (1) angeordnet ist.

6. Vorrichtung nach Anspruch 4 oder 5,
**dadurch gekennzeichnet, dass** das Übersetzungsverhältnis des Schrittgetriebes so gewählt ist, dass das Werkzeugrad (5) in Bezug auf das Packungstransportrad (1) entsprechend der Anzahl der zu bearbeitenden Packungen (P) sowie der Bearbeitungsdauer verfahrbar ist.

7. Vorrichtung nach einem der Ansprüche 3 bis 6,
**dadurch gekennzeichnet, dass** die Antriebswelle (8) des Getriebes (7) vom Packungstransportrad (1) angetrieben ist, in dem ein auf der Antriebswelle (8) des Getriebes (7) angeordnetes Zahnrad (10) mit einem stillstehenden Sonnenrad (11) kämmt.

8. Vorrichtung nach Anspruch 1 bis 7,
**dadurch gekennzeichnet, dass** die Anzahl der Aufnahmestationen ein ganzzahliges Mehrfaches der Anzahl der Schweißwerkzeuge (6) beträgt.

9. Vorrichtung nach einem der Ansprüche 3 bis 7,
**dadurch gekennzeichnet, dass** ein separater Antrieb zum Drehen des Getriebes vorgesehen ist.

10. Vorrichtung nach einem der Ansprüche 1 bis 9,
**dadurch gekennzeichnet, dass** auf dem Packungstransportrad (1) 28 Aufnahmestationen und auf dem Werkzeugrad (5) 7 Schweißwerkzeuge (6) vorgesehen sind.

11. Verfahren zum Applizieren von Ausgießelementen auf und/oder Verschließen von Karton/Kunststoff-Verbundpackungen mittels Ultraschall-Schweißwerkzeugen, wobei die Packungen mittels einer Transportvorrichtung endlos hintereinander transportiert werden, wobei die Packungen von einem Packungstransportrad auf einer Kreisbahn transportiert werden, wobei die Drehgeschwindigkeit der Schweißwerkzeuge relativ zur Drehgeschwindigkeit der Aufnahmestationen veränderbar ist, wobei die Schweißwerkzeuge während der Bearbeitung synchron mit den Aufnahmestationen mitlaufen und wobei jedes Schweißwerkzeug nach einem Bearbeitungsschritt zur benachbarten Aufnahmestation verfährt.

12. Verfahren nach Anspruch 11,
**dadurch gekennzeichnet, dass** die Dreh- bzw. Versatzgeschwindigkeit der Schweißwerkzeuge auf die Drehgeschwindigkeit der Aufnahmestationen abstimmbar ist.

13. Verfahren nach Anspruch 11 oder 12,
**dadurch gekennzeichnet, dass** die Dreh- bzw. Versatzgeschwindigkeiten der Schweißwerkzeuge und der Aufnahmestationen in einem festen Verhältnis zueinander stehen.

## Claims

1. A device for applying pouring elements to and/or sealing cardboard/plastic composite packages (P) using ultrasonic welding tools (6),
wherein the packages (P) are transported in receptacle stations positioned one after another endlessly using a transport device, a package transport wheel (1) is provided as the transport device, the number of the receptacle stations on the package transport wheel (1) is greater than the number of welding tools (6) used, and the welding tools (6) are movable in relation to the receptacle stations.

2. The device according to Claim 1,
**characterized in that** the welding tools (6) are positioned on a tool wheel (5) rotatable concentrically to the package transport wheel (1).

3. The device according to Claim 2,
**characterized in that** a transmission (7) is provided between the package transport wheel (1) and the tool (5).

4. The device according to Claim 3,
**characterized in that** the transmission (7) is a stepping transmission.

5. The device according to Claim 3 or 4,
**characterized in that** the transmission (7) is positioned fixed in place on the package transport wheel (1).

6. The device according to Claim 4 or 5,
**characterized in that** the transmission ratio of the stepping transmission is selected in such a way that the tool wheel (5) is movable in relation to the package transport wheel (1) in accordance with the number of packages (P) to be processed and the processing duration.

7. The device according to one of Claims 3 through 6,
**characterized in that** the driveshaft (8) of the transmission (7) is driven by the package transport wheel (1) **in that** a gearwheel (10) positioned on the driveshaft (8) of the transmission (7) engages with a stationary sun wheel (11).

8. The device according to Claims 1 through 7,
**characterized in that** the number of the receptacle stations is an integral multiple of the number of the welding tools (6).

9. The device according to one of Claims 3 through 7,
**characterized in that** a separate drive is provided for rotating the transmission.

10. The device according to one of Claims 1 through 9,
**characterized in that** 28 receptacle stations are provided on the package transport wheel (1) and 7 welding tools (6) are provided on the tool wheel (5).

11. A method for applying pouring elements to and/or sealing cardboard/plastic composite packages using ultrasonic welding tools,
wherein the packages are transported endlessly one after another using a transport device, the packages are transported by a package transport wheel on a circular path, the rotational velocity of the welding tools is changeable in relation to the rotational velocity of the receptacle stations, the welding tools run synchronously with the receptacle stations during the processing, and every welding tool travels to the neighboring receptacle station after a processing step.

12. The method according to Claim 11,
**characterized in that** the rotational and/or displacement velocity of the welding tools is adaptable to the rotational velocity of the receptacle stations.

13. The method according to Claim 11 or 12,
**characterized in that** the rotational and/or displacement velocities of the welding tools and the receptacle stations are in a fixed ratio to one another.

## Revendications

1. Dispositif pour l'application d'éléments verseurs sur et/ou la fermeture d'emballages composites carton/plastique (P) à l'aide d'outils de soudage par ultrasons (6), où les emballages (P) sont transportés à l'aide d'un dispositif de transport dans des postes de prélèvement agencés l'un après l'autre sans fin, où comme dispositif de transport, est prévue une roue de transport des emballages (1), où le nombre de postes de prélèvement sur la roue de transport des emballages (1) est supérieur au nombre d'outils de soudage (6) utilisés et où les outils de soudage (6) sont déplaçables par rapport aux postes de prélèvement.

2. Dispositif selon la revendication 1, **caractérisé en ce que** les outils de soudage (6) sont agencés sur une roue d'outils (5) pouvant tourner de manière concentrique à la roue de transport d'emballage (1).

3. Dispositif selon la revendication 2, **caractérisé en ce qu'**entre la roue de transport d'emballages (1) et l'outil, un engrenage (7) est prévu.

4. Dispositif selon la revendication 3, **caractérisé en ce que** l'engrenage (7) est un engrenage pas à pas.

5. Dispositif selon la revendication 3 ou 4,
**caractérisé en ce que** l'engrenage (7) est agencé de manière fixe sur la roue de transport d'emballages (1).

6. Dispositif selon la revendication 4 ou 5,
**caractérisé en ce que** le rapport de transmission de l'engrenage pas à pas est choisi de sorte que la roue d'outil (5) est déplaçable par rapport à la roue de transport d'emballage (1) selon le nombre d'emballages (P) à traiter ainsi que la durée du traitement.

7. Dispositif selon l'une des revendications 3 à 6, **caractérisé en ce que** l'axe d'entraînement de l'engrenage (7) est entraîné par la roue de transport d'emballage (1), **en ce qu'**une roue dentée disposée sur l'axe d'entraînement (8) de l'engrenage (7) s'engrène avec une roue solaire (11) stationnaire.

8. Dispositif selon l'une des revendications 1 à 7, **caractérisé en ce que** le nombre de postes de prélèvement s'élève à un nombre entier de fois le nombre d'outils de soudage (6).

9. Dispositif selon l'une des revendications 3 à 7, **caractérisé en ce qu'**un entraînement séparé est prévu pour la rotation de l'engrenage.

10. Dispositif selon l'une des revendications 1 à 9, **caractérisé en ce que** sur la roue de transport d'emballages (1), 28 postes de prélèvement sont prévus et sur la roue d'outil (5), 7 outils de soudage (6) sont prévus.

11. Procédé pour l'application d'éléments verseurs sur et/ou la fermeture d'emballages composites carton/plastique à l'aide d'outils de soudage par ultrasons, où les emballages sont transportés l'un après l'autre, sans fin, par un dispositif de transport, où les emballages sont transportés par une roue de transport d'emballage sur un trajet circulaire, où la vitesse de rotation des outils de soudage est modifiable par rapport à la vitesse de rotation des postes de prélèvement, où les outils de soudage tournent de manière synchrone aux postes de prélèvement et où chaque outil de soudage se déplace au poste de prélèvement suivant après une étape de traitement.

12. Procédé selon la revendication 11, **caractérisé en ce que** la vitesse de rotation et respectivement, de déplacement des outils de soudage peut être ajustée à la vitesse de rotation des postes de prélèvement.

13. Procédé selon la revendication 11 ou 12,
**caractérisé en ce que** les vitesses de rotation et respectivement, de déplacement des outils de soudage et des postes de prélèvement se trouvent l'une par rapport à l'autre, en un rapport fixe.
